# EUROPÄISCHE PATENTSCHRIFT

(11) **EP 3 538 812 B1**
(45) Veröffentlichungstag und Bekanntmachung des Hinweises auf die Patenterteilung: **29.07.2020**
(21) Anmeldenummer: 17793868.5
(22) Anmeldetag: 18.10.2017
(51) Int. Cl.: F21S 41/265, F21S 43/20

(54) **BELEUCHTUNGSVORRICHTUNG, INSBESONDERE FÜR EIN KRAFTFAHRZEUG**
ILLUMINATION DEVICE, IN PARTICULAR FOR A MOTOR VEHICLE
DISPOSITIF D'ÉCLAIRAGE, NOTAMMENT POUR VÉHICULE AUTOMOBILE

(30) Priorität: 09.11.2016 DE 102016221918
(43) Veröffentlichungstag der Anmeldung: 18.09.2019
(73) Patentinhaber: Bayerische Motoren Werke Aktiengesellschaft, 80809 München (DE)
(72) Erfinder: GEHB, Tina, 82008 Unterhaching (DE); LEWERICH, Burkhard, 80634 München (DE); MÜLLER, Martin, 07751 Jena (DE); RIEDEL, Alf, 07743 Jena (DE); BRILL, Florian, 07745 Jena (DE); DROZDZYK, Dominik, 52-129 Wroclaw (PL)
(86) Internationale Anmeldenummer: PCT/EP2017/076525
(87) Internationale Veröffentlichungsnummer: WO 2018/086829

(56) Entgegenhaltungen:
- WO-A1-2012/156280
- WO-A1-2014/164792
- WO-A1-2015/058227
- DE-A1-102007 029 204
- US-A1- 2015 252 975
- US-A1- 2016 018 081

## Beschreibung

Die Erfindung betrifft eine Beleuchtungsvorrichtung, insbesondere für ein Kraftfahrzeug.

Aus dem Stand der Technik sind Multiapertur-Projektionsdisplays bekannt, welche mit einer Vielzahl von optischen Kanälen umfassend entsprechende Projektionslinsen Bildsegmente in eine Projektionsebene abbilden. Ein solches Projektionsdisplay ist beispielsweise in der Druckschrift DE 10 2009 024 894 A1 beschrieben.

Die oben genannten Projektionsdisplays werden beispielsweise als Umfeldbeleuchtungseinrichtung in einem Kraftfahrzeug verwendet. In der Druckschrift DE 10 2013 211 877 A1 ist ein Multiapertur-Projektionsdisplay offenbart, das in dem Türschweller eines Kraftfahrzeugs verbaut ist und eine Lichtverteilung am Boden seitlich neben dem Kraftfahrzeug nach Art eines Lichtteppichs generiert.

In herkömmlichen Multiapertur-Projektionsdisplays wird in jedem optischen Kanal die gleiche Projektionslinse verwendet, wobei jede Projektionslinse das gleiche Einzelbild in der Projektionsebene erzeugt. Die Einzelbilder decken jeweils die gesamte Lichtverteilung in der Projektionsebene ab, so dass die Lichtverteilung eine Überlagerung der Einzelbilder ist. Dies hat den Nachteil, dass bei einer Neigung der Projektionsebene gegenüber den Projektionslinsen keine konstante Helligkeit der Lichtverteilung gewährleistet ist, da die Helligkeit der Lichtverteilung näherungsweise mit der dritten Potenz des Abstands der Flächenbereiche der Projektionsebene zum Projektionsdisplay abnimmt.

Um eine gleichmäßige Helligkeitsverteilung für schräge Projektionsebenen zu gewährleisten, können bestimmte Bereiche in den einzelnen Bildsegmenten eines Multiapertur-Displays abgeschattet werden, um hierdurch die Helligkeit von näher am Projektionsdisplay liegenden Bereichen in der projizierten Lichtverteilung zu vermindern. Dies führt jedoch zu einem Lichtverlust und damit zu einer schlechten Effizienz des Projektionsdisplays.

Die Druckschrift WO 2014/164792 A1 beschreibt ein Multiapertur-Projektionsdisplay, mit dem beleuchtete Bildsegmente über ein Array von Projektionslinsen abgebildet werden. Dabei können unterschiedliche Projektionslinsen für unterschiedliche Bildsegmente verwendet werden.

Aufgabe der Erfindung ist es, eine Beleuchtungsvorrichtung mit einem Multiapertur-Projektionsdisplay zu schaffen, welches einfach und effizient die Projektion von Licht mit einer vorgegebenen Helligkeitsverteilung in der Projektionsebene ermöglicht.

Diese Aufgabe wird durch die Beleuchtungsvorrichtung gemäß Patentanspruch 1 gelöst. Weiterbildungen der Erfindungen sind in den abhängigen Patentansprüchen definiert.

Die erfindungsgemäße Beleuchtungsvorrichtung, die vorzugsweise für ein Kraftfahrzeug vorgesehen ist, umfasst ein Multiapertur-Projektionsdisplay mit einem Leuchtmittel zur Beleuchtung einer Vielzahl von Bildsegmenten sowie einem Array aus Projektionslinsen, wobei jeder Projektionslinse ein Bildsegment zugeordnet ist, das mittels der zugehörigen Projektionslinse in eine Projektionsebene projiziert wird, wodurch in der Projektionsebene aus allen projizierten Bildsegmenten eine Lichtverteilung erzeugt wird. In einer bevorzugten Variante umfasst das Leuchtmittel eine oder mehrere LEDs, wie z.B. RGB-LEDs, und/oder Laserdioden. Die Projektionslinsen sind vorzugsweise Mikrolinsen, die in Draufsicht eine maximale Ausdehnung von 2000 µm oder weniger aufweisen. Je nach Ausgestaltung kann die Anzahl der Projektionslinsen variieren. Vorzugsweise umfasst das Array zwischen 100 und 400 Projektionslinsen. Vorzugsweise liegen alle Projektionslinsen in einer gemeinsamen Ebene. Die durch das Leuchtmittel beleuchteten Bildsegmente können beispielsweise durch eine Chrommaske oder einen Bildgeber, wie z.B. ein LED-Display, erzeugt werden.

In der erfindungsgemäßen Beleuchtungsvorrichtung umfasst das Array aus Projektionslinsen mehrere Teilarrays, wobei ein jeweiliges Teilarray die gleichen Projektionslinsen enthält und sich die Projektionslinsen von unterschiedlichen Teilarrays derart voneinander unterscheiden, dass jedes Teilarray einen Flächenbereich in der Lichtverteilung generiert und die Größe und/oder die Position der generierten Flächenbereiche zwischen den Teilarrays unterschiedlich ist. Je nach Ausgestaltung können die Flächenbereiche der Teilarrays miteinander überlappen oder disjunkt zueinander sein. Durch die Verwendung von unterschiedlichen Projektionslinsen kann auf einfache Weise erreicht werden, dass Flächenbereiche in der projizierten Lichtverteilung mit unterschiedlicher Intensität beleuchtet werden, ohne dass es zu Lichtverlusten kommt.

In der erfindungsgemäßen Beleuchtungsvorrichtung beruhen alle Projektionslinsen des Arrays auf einem vorbestimmten Linsentyp mit vorgegebener Form und Größe, wobei die Projektionslinsen eines oder mehrerer der Teilarrays jeweils einen Teilbereich des vorbestimmten Linsentyps in dessen Draufsicht darstellen. Hierdurch wird auf eine einfache Weise die Generierung einer scharfen Lichtverteilung in der Projektionsebene erreicht. Vorzugsweise ist ferner eines der Teilarrays derart ausgestaltet, dass die Projektionslinsen dieses Teilarrays jeweils mit dem vorbestimmten Linsentyp übereinstimmen. Dieses Teilarray ist in einer besonders bevorzugten Variante das oben beschriebene erste Teilarray, dessen generierter Flächenbereich mit der Gesamtfläche der Lichtverteilung in der Projektionsebene übereinstimmt.

Erfindungsgemäß ist der oben genannte Teilbereich des vorbestimmten Linsentyps ein Bereich, der von der Fläche des vorbestimmten Linsentyps in dessen Draufsicht mittels einer oder mehrerer Linien abgetrennt ist. Die Linien können je nach Ausführungsform zumindest abschnittsweise gerade und/oder zumindest abschnittsweise gekrümmt sein. Im Falle, dass der vorbestimmte Linsentyp in Draufsicht einen kreisförmigen Rand aufweist, können die Linien z.B. Sehnen des Kreises darstellen.

In einer besonders bevorzugten Ausführungsform umfassen die Teilarrays ein erstes Teilarray, dessen generierter Flächenbereich mit der Gesamtfläche der Lichtverteilung in der Projektionsebene übereinstimmt, sowie ein zweites Teilarray, dessen generierter Flächenbereich eine Teilfläche der Lichtverteilung in der Projektionsebene ist. Hierdurch kann dediziert eine bestimmte Teilfläche der Lichtverteilung stärker beleuchtet werden. In einer weiteren Ausführungsform wird durch das erste Teilarray auch nur eine Teilfläche der Lichtverteilung generiert, wobei diese Teilfläche ggf. mit der Teilfläche, die das zweite Teilarray generiert, überlappt.

In einer weiteren Variante der erfindungsgemäßen Beleuchtungsvorrichtung enthalten die Bildsegmente jeweils eine Objektstruktur, welche durch die zugehörige Projektionslinse in die Projektionsebene projiziert wird. Die Objektstruktur kann beispielsweise durch eine Chrommaske gebildet sein. Die Objektstrukturen der Bildsegmente, die durch die Projektionslinsen des gleichen Teilarrays projiziert werden, sind derart ausgestaltet, dass diese Objektstrukturen das gleiche Einzelbild in dem entsprechenden Flächenbereich in der Projektionsebene erzeugen.

In einer besonders bevorzugten Variante der soeben beschriebenen Ausführungsform stellt eine jeweilige Objektstruktur des oben beschriebenen zweiten Teilarrays einen Ausschnitt aus einer jeweiligen Objektstruktur des oben beschriebenen ersten Teilarrays derart dar, dass im Überlappungsbereich der generierten Flächenbereiche des ersten und zweiten Teilarrays die Bilder der beiden Teilarrays miteinander übereinstimmen. Hierdurch wird sichergestellt, dass sich die Einzelbilder des ersten und zweiten Teilarrays deckungsgleich überlagern.

Je nach Ausgestaltung kann die erfindungsgemäße Beleuchtungsvorrichtung verschiedene Funktionen in einem Kraftfahrzeug übernehmen. Zum Beispiel kann die Beleuchtungsvorrichtung in einem Scheinwerfer oder in einer Leuchte des Kraftfahrzeugs integriert sein. In einer besonders bevorzugten Variante ist die Beleuchtungsvorrichtung jedoch eine Umfeldbeleuchtungseinrichtung zur Erzeugung einer Lichtverteilung auf dem Boden in der Umgebung des Kraftfahrzeugs. In diesem Sinne stellt der Boden die Projektionsebene für das Multiapertur-Projektionsdisplay dar.

In einer bevorzugten Variante, in der die Beleuchtungsvorrichtung eine Umfeldbeleuchtungseinrichtung ist, sind die Projektionslinsen der Teilarrays derart ausgestaltet, dass in einer schrägen Einbauposition der Umfeldbeleuchtungseinrichtung im Kraftfahrzeug die Lichtstärke der Lichtstrahlung des Multiapertur-Projektionsdisplays in einem ersten Winkelbereich, der auf einen Bereich des Bodens mit größerem Abstand vom Multiapertur-Projektionsdisplay als ein zweiter Winkelbereich fällt, höher ist als die Lichtstärke der Lichtstrahlung des Multiapertur-Projektionsdisplays in dem zweiten Winkelbereich. Die schräge Einbauposition zeichnet sich dadurch aus, dass der Boden gegenüber der Ebene, in der die Projektionslinsen angeordnet sind, geneigt ist, d.h. der Boden verläuft nicht senkrecht und nicht parallel zu dieser Ebene. Mit dieser Variante der Erfindung kann einer Abnahme der Helligkeit der Lichtverteilung auf der schrägen Projektionsfläche des Bodens entgegengewirkt werden.

Neben der oben beschriebenen Beleuchtungsvorrichtung betrifft die Erfindung ferner ein Kraftfahrzeug, welches eine oder mehrere der erfindungsgemäßen Beleuchtungsvorrichtungen bzw. bevorzugter Varianten dieser Beleuchtungsvorrichtungen umfasst.

Ausführungsbeispiele der Erfindung werden nachfolgend anhand der beigefügten Figuren detailliert beschrieben.

Es zeigen:
- Fig. 1: eine Seitenansicht eines Kraftfahrzeugs mit einer erfindungsgemäßen Umfeldbeleuchtungseinrichtung;
- Fig. 2: eine Draufsicht auf das Kraftfahrzeug der Fig. 1;
- Fig. 3: eine schematische Detailansicht der in Fig. 1 gezeigten Umfeldbelechtungseinrichtung;
- Fig. 4 und Fig. 5: Draufsichten auf ein Array aus Projektionslinsen gemäß zwei Ausführungsformen der Erfindung;
- Fig. 6 und Fig. 7: schematische Seitenansichten, welche die unterschiedlichen Flächenbereiche verdeutlichen, die in der Lichtverteilung durch die Projektionslinsen von verschiedenen Teilarrays aus Fig. 4 und Fig. 5 abgedeckt werden;
- Fig. 8: eine Draufsicht auf ein Array aus Projektionslinsen gemäß einer weiteren Ausführungsform der Erfindung;
- Fig. 9 bis Fig. 11: schematische Darstellungen, welche wiedergeben, wie die Projektionslinsen 12' aus den Projektionslinsen 12 der Fig. 8 hervorgehen.

Nachfolgend wird eine Ausführungsform einer erfindungsgemäßen Beleuchtungsvorrichtung anhand einer Umfeldbeleuchtungseinrichtung in einem Kraftfahrzeug erläutert. Die Umfeldbeleuchtungseinrichtung ist im Türschweller des Kraftfahrzeugs integriert und zur seitlichen Beleuchtung des Bereichs neben den Personeneinstiegstüren des Kraftfahrzeugs vorgesehen.

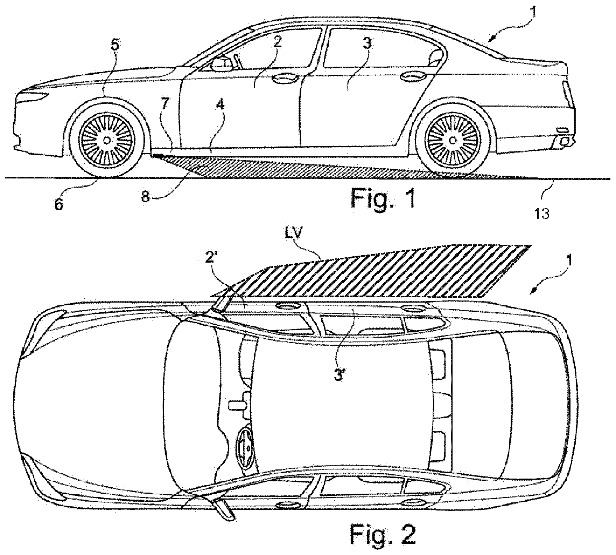

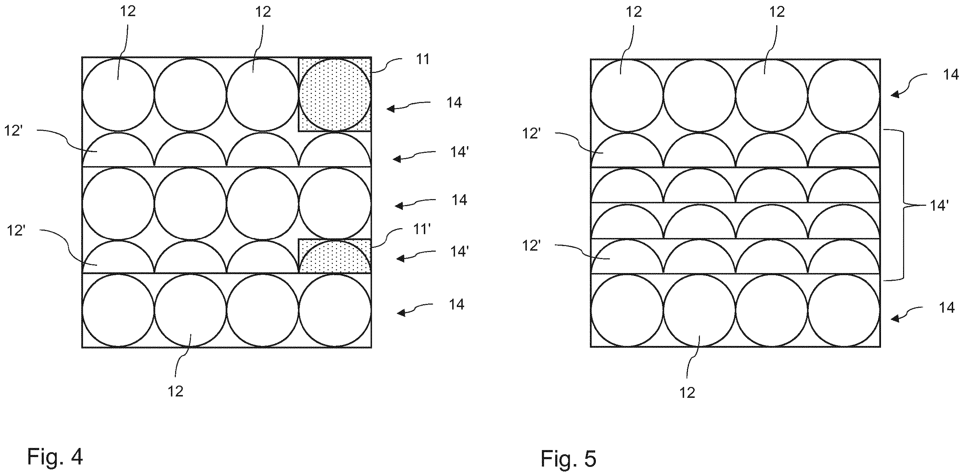

Fig. 1 zeigt eine Seitenansicht des Kraftfahrzeugs in der Form des PKWs 1, welcher auf dem Boden 13 steht. Der PKW umfasst auf der dargestellten linken Seite eine Fahrertür 2 sowie eine Fondtür 3. Analog sind auf der gegenüberliegenden Seite des Fahrzeugs (Fig. 2) eine Beifahrertür 2' und eine dahinter liegende Fondtür 3' vorgesehen. In der Ausführungsform der Fig. 1 ist in dem Türschweller 4 unterhalb der Türen 2 und 3 eine Umfeldbeleuchtungseinrichtung in der Form eines Multiapertur-Projektionsdisplays 7 vorgesehen. Diese Beleuchtungseinrichtung befindet sich am vorderen Ende des Türschwellers 4 im Bereich des Radkastens 5, der das Rad 6 umgibt. Das Multiapetur-Projektionsdisplay umfasst ein Array aus Projektionslinsen 12, 12' in der Form von Mikrolinsen, wie insbesondere aus Fig. 4 und 5 ersichtlich ist. Mit dem Multiapertur-Projektionsdisplay wird eine vorbestimmte Lichtverteilung neben den Türen 2 und 3 des Kraftfahrzeugs auf den Boden 13 projiziert.

Aus der DE 10 2013 211 877 A1 ist es bekannt, als Umfeldbeleuchtungseinrichtung ein Multiapertur-Projektionsdisplay einzusetzen, dessen Projektionslinsen alle die gleiche Größe aufweisen. Insbesondere wird dabei das Multiapertur-Projektionsdisplay verwendet, welches in der Druckschrift DE 10 2009 024 894 A1 beschrieben ist. In diesem Display erzeugen die einzelnen Projektionslinsen das gleiche Einzelbild, wobei sich das projizierte Gesamtbild aus der Überlagerung dieser Einzelbilder zusammen. Im Unterschied hierzu wird in der hier beschriebenen Umfeldbeleuchtungseinrichtung ein Multiapertur-Projektionsdisplay verwendet, das unterschiedliche Projektionslinsen aufweist, um hierdurch Helligkeitsunterschiede in der projizierten Lichtverteilung zu kompensieren, wie im Folgenden noch näher erläutert wird.

In Fig. 1 ist die Ausbreitungsrichtung des auf den Boden 13 geworfenen Lichts des Multiapertur-Projektionsdisplays 7 mit Bezugszeichen 8 bezeichnet. Durch dieses Licht wird auf dem Boden neben dem Fahrzeug 1 die Lichtverteilung LV projiziert, die aus der Draufsicht der Fig. 2 ersichtlich ist. Diese Lichtverteilung erzeugt den Effekt eines Lichtteppichs. Es ist dabei zu beachten, dass die Lichtverteilung anders als in Fig. 1 rechts neben dem Fahrzeug 1 benachbart zu den Türen 2' und 3' wiedergegeben ist. Dies ist möglich, denn im Kraftfahrzeug sind symmetrisch auf der rechten und linken Seiten Multiapertur-Projektionsdisplays 7 verbaut. Mit anderen Worten werden sowohl auf der linken Seite als auch auf der rechten Seite des Fahrzeugs benachbart zu den Einstiegstüren entsprechend gespiegelte Lichtverteilungen erzeugt. Aus Übersichtlichkeitsgründen ist in Fig. 2 nur die Lichtverteilung benachbart zu den Türen 2' und 3' wiedergegeben.

In dem Ausführungsbeispiel der Fig. 2 stellt die Lichtverteilung LV ein Muster aus parallelen Streifen dar, welche schräg zur Längsachse des Fahrzeugs verlaufen. Die Streifen sind dunkel dargestellt und repräsentieren in der tatsächlichen Lichtverteilung helle Balken auf dem Boden neben dem Fahrzeug. Wie aus Fig. 2 ersichtlich wird, weitet sich die Lichtverteilung von der vorderen Tür 2' hin zum Bereich hinter der Tür 3' auf. Da das Licht des Multiapertur-Projektionsdisplays 7 schräg auf den Boden 13 neben den Kraftfahrzeug 1 fällt, besteht bei der Verwendung des oben genannten herkömmlichen Multiapertur-Projektionsdisplays mit identischen Projektionslinsen das Problem, dass die Helligkeit des Lichtmusters LV mit zunehmendem Abstand von dem Multiapertur-Projektionsdisplay abnimmt. Dies liegt daran, dass alle gleich aufgebauten Projektionslinsen in den gleichen Winkelbereich abstrahlen. Im Unterschied hierzu enthält das hier beschriebene Multiapertur-Projektionsdisplay 7 Projektionslinsen unterschiedlicher Art, welche in unterschiedliche Winkelbereiche abstrahlen, so dass eine gleichmäßige Helligkeit der Lichtverteilung mit zunehmendem Abstand von dem Multiapertur-Projektionsdisplay erreicht werden kann, wie im Folgenden noch näher erläutert wird.

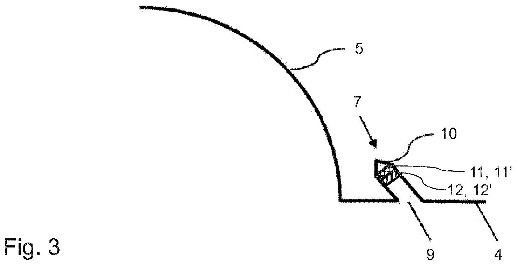

Fig. 3 zeigt im Schnitt eine Detailansicht des Multiapertur-Projektionsdisplays aus Fig. 1. Das Display 7, welches benachbart zum Radkasten 5 im Türschweller 4 integriert ist, umfasst ein schematisch angedeutetes Leuchtmittel 10, welches als Lichtquelle eine LED sowie eine Kollimationsoptik umfasst, um hierdurch im Wesentlichen paralleles Licht zu generieren. Dieses Licht fällt auf eine Vielzahl von Bildsegmenten bzw. Dias 11, 11', welche in Fig. 3 nur schematisch angedeutet sind. Die Dias enthalten entsprechende Objektstrukturen, um die streifenförmige Lichtverteilung LV zu erzeugen. Vor den Dias 11, 11' befindet sich ein Array aus Projektionslinsen 12, 12', welches in Fig. 3 ebenfalls nur schematisch wiedergegeben ist. Jedem Dia ist dabei eine Projektionslinse zugeordnet, welche die Objektstruktur des Dias auf den Boden 13 neben dem Kraftfahrzeug 1 projiziert, so dass durch die projizierten Bilder aller Projektionslinsen die Lichtverteilung LV erzeugt wird. Das Multiapertur-Projektionsdisplay 7 ist in einem schräg nach hinten verlaufenden Lichtschacht 9 angeordnet, so dass sichergestellt wird, dass das Leuchtmittel nicht direkt eingesehen werden kann, wodurch gesetzlichen Anforderungen Rechnung getragen wird.

Fig. 4 zeigt in schematischer Draufsicht eine Variante eines Arrays aus Projektionslinsen, welches in dem Multiapertur-Projektionsdisplay 7 der Fig. 3 verwendet werden kann. Das Array umfasst sowohl runde Projektionslinsen 12 als auch halbrunde Projektionslinsen 12'. Aus Übersichtlichkeitsgründen sind nur einige der Projektionslinsen mit den Bezugszeichen 12 bzw. 12' versehen. Die Projektionslinsen 12 bilden ein erstes Teilarray 14, welches durch die erste, dritte und fünfte Zeile des dargestellten Arrays gebildet ist. Demgegenüber bilden die zweite Zeile und die vierte Zeile des Arrays ein zweites Teilarray 14' mit den halbrunden Projektionslinsen 12'. Alle Projektionslinsen 12 des ersten Teilarrays 14 sind gleich aufgebaut. Analog sind auch alle Projektionslinsen 12' des zweiten Teilarrays gleich aufgebaut. Hinter jeder der Projektionslinsen 12, 12' befindet sich ein Dia, wobei beispielhaft durch gepunktete Rechtecke ein einzelnes Dia 11 für eine Projektionslinse 12 und ein einzelnes Dia 11' für eine Projektionslinse 12' angedeutet sind. Die halbrunden Projektionslinsen 12' entsprechen im Aufbau exakt der oberen Hälfte einer Projektionslinse 12. Demzufolge weisen alle Projektionslinsen 12 und 12' die gleiche Brennweite auf. In Analogie zu dem Projektionsdisplay, welches in der oben genannten Druckschrift DE 10 2009 024 894 A1 gezeigt ist, entspricht der Abstand zwischen den Projektionslinsen und den zugeordneten Dias der Brennweite der Projektionslinsen. Darüber hinaus können ggf. auch die in obiger Druckschrift gezeigten Feldlinsen vor den entsprechenden Dias angeordnet sein.

Alle zu den Projektionslinsen 12 gehörenden Dias 11 enthalten die gleiche Objektstruktur, welche derart ausgestaltet ist, dass die streifenförmige Lichtverteilung LV auf dem Boden 13 neben den Kraftfahrzeugtüren erzeugt wird. Die Projektionslinsen 12 erzeugen dabei jeweils ein Einzelbild, welches der Größe der gesamten Lichtverteilung LV entspricht. Somit wird durch die Projektionslinsen 12 eine Überlagerung der gleichen Einzelbilder erreicht. Wie bereits oben beschrieben, nimmt die Helligkeit der Lichtverteilung bei ausschließender Verwendung von Projektionslinsen 12 aufgrund der schrägen Ausrichtung des Projektionsdisplays zum Boden mit zunehmendem Abstand vom Projektionsdisplay ab. Um dieser Abnahme entgegenzuwirken, projizieren die Projektionslinsen 12' ausschließlich Licht in einen entfernt zum Projektionsdisplay liegenden Bereich der Lichtverteilung LV. Die jeweiligen Objektstrukturen der Dias 11' stellen dabei die obere Hälfte der entsprechenden Objektstrukturen in den Dias 11 dar, so dass es zu einer Überdeckung der Bilder von beiden Arten von Projektionslinsen 12 und 12' kommt.

Die genaue Aufteilung der Projektionslinsen 12 und 12' in Teilarrays ist aufgrund des großen Abstands des Bodens 13 von dem Projektionsdisplay 7 im Vergleich zu den Abmessungen der Linsen 12 und 12' von untergeordneter Bedeutung. Demzufolge können die Teilarrays auch anders aufgeteilt sein. Eine andere Aufteilung in Teilarrays ist in der Fig. 5 gezeigt. Die Projektionslinsen 12 und 12' in diesem Array sind genauso aufgebaut wie in dem Array der Fig. 4. Im Unterschied zu dem Array der Fig. 4 enthält das Array der Fig. 5 jedoch nur noch in der obersten und der untersten Zeile die Projektionslinsen 12, die das erste Teilarray 14 bilden. Zwischen diesen beiden Zeilen befinden sich vier Zeilen mit Projektionslinsen 12', die das zweite Teilarray 14' bilden. Die mit diesem Array erzeugte Lichtverteilung weicht nur geringfügig von der Lichtverteilung ab, die mit dem Array der Fig. 4 generiert wird.

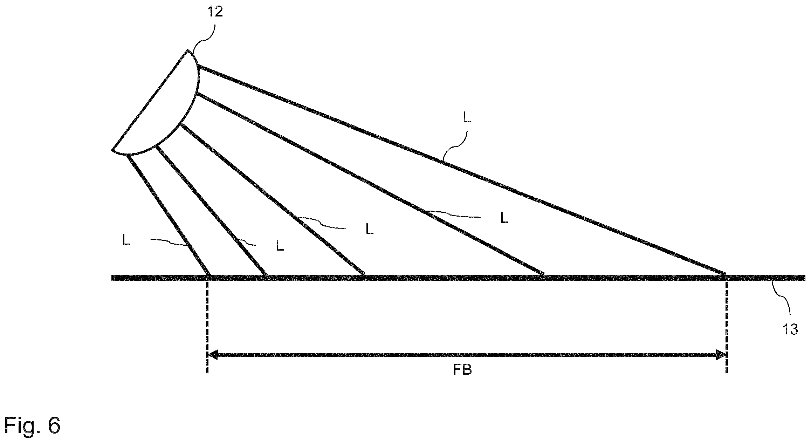

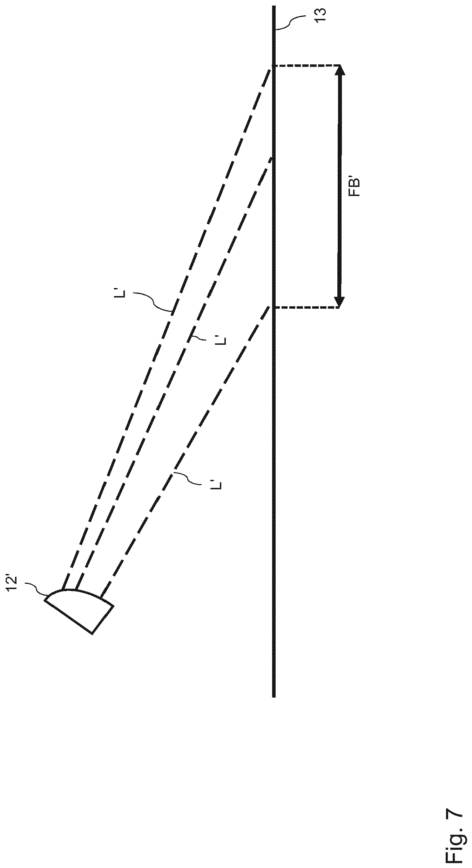

Fig. 6 und Fig. 7 verdeutlichen in schematischer Seitenansicht die unterschiedlichen Flächenbereiche, welche durch die beiden Arten von Projektionslinsen 12 und 12' aus Fig. 4 und Fig. 5 abgedeckt werden. Fig. 6 zeigt beispielhaft eine der Projektionslinsen 12 mit entsprechendem Strahlengang nach Passieren der Linse, der durch eine Vielzahl von durchgezogenen Linien L angedeutet ist. Wie man erkennt, wird am Boden 13 der Flächenbereich FB in Längsrichtung des Fahrzeugs durch das Licht der Projektionslinsen abgedeckt.

Fig. 7 zeigt den Flächenbereich, welche eine jeweilige Projektionslinse 12' abdeckt. Der entsprechende Strahlengang nach Passieren der Linse 12' ist durch gestrichelte Linie L' angedeutet. Da im Vergleich zur Projektionslinse 12 der Fig. 6 nur noch Licht durch einen halb so großen Bereich aus der Linse 12' tritt, wird ein wesentlich kleinerer Flächenbereich FB' beleuchtet, der mit dem hinteren Abschnitt des Flächenbereichs FB überlappt. Auf diese Weise wird erreicht, dass der hintere Bereich der Lichtverteilung LV stärker beleuchtet wird als der vordere Teil dieser Lichtverteilung, so dass hierdurch der Abnahme der Helligkeit mit zunehmendem Abstand von den Projektionslinsen entgegengewirkt wird. Demzufolge können in der Lichtverteilung LV Streifen mit weitgehend konstanter Helligkeit erzeugt werden.

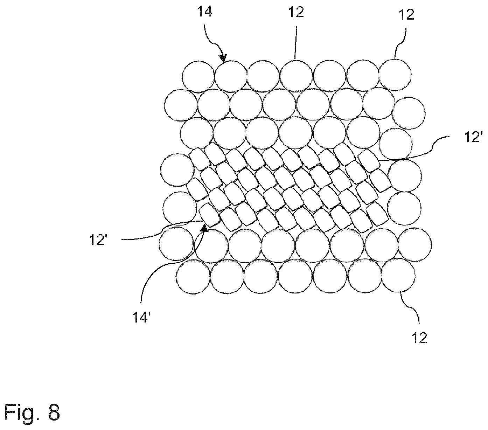

Fig. 8 zeigt eine Draufsicht auf eine weitere Ausführungsform eines Arrays aus Projektionslinsen. In Analogie zu Fig. 4 und Fig. 5 umfasst das Array ein Teilarray 14, welches aus kreisrunden Linsen 12 besteht. Dieses Teilarray 14 umgibt das Teilarray 14', welches im Unterschied zu den Ausführungsformen der Fig. 4 und Fig. 5 nicht aus halbkreisförmigen Linsen, sondern aus Linsen 12' besteht, die vier gekrümmte Kanten aufweisen. Aus Übersichtlichkeitsgründen sind wiederum nur ein Teil der Linsen mit den Bezugszeichen 12 bzw. 12' bezeichnet.

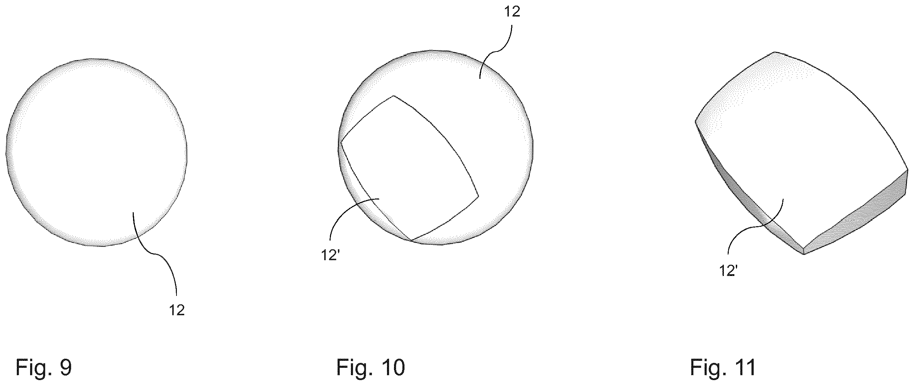

Fig. 9 bis Fig. 11 verdeutlichen, wie die Linsen 12' aus den Linsen 12 der Fig. 8 hervorgehen. Fig. 9 zeigt zunächst eine der kreisrunden Linsen 12 aus dem Array der Fig. 8. Aus dieser kreisrunden Linse wird ein Bereich mit den in Fig. 10 dargestellten gekrümmten Linsen ausgeschnitten. Dieser ausgeschnittene Bereich führt dann zu der Linse 12', welche in Fig. 11 perspektivisch dargestellt ist.

Die im Vorangegangenen beschriebenen Ausführungsformen der Erfindung weisen eine Reihe von Vorteilen auf. Insbesondere kann durch die Verwendung von mehreren unterschiedlichen Projektionslinsen in einem Multiapertur-Projektionsdisplay eine geeignete Einstellung der Helligkeit in der projizierten Lichtverteilung ohne Verluste und mit einem kompakten Aufbau des Displays gewährleistet werden. Die Erfindung ist dabei nicht auf die oben beschriebene Umfeldbeleuchtungseinrichtung beschränkt. Gegebenenfalls kann das erfindungsgemäße Multiapertur-Projektionsdisplay auch in einem Scheinwerfer oder einer Leuchte eines Kraftfahrzeugs zum Einsatz kommen.

### Bezugszeichenliste

- 1: Kraftfahrzeug
- 2, 2', 3, 3': Fahrzeugtüren
- 4: Türschweller
- 5: Radkasten
- 6: Rad
- 7: Multiapertur-Projektionsdisplay
- 8: Lichtausbreitung
- 9: Lichtschacht
- 10: Leuchtmittel
- 11, 11': Bildsegmente
- 12, 12': Projektionslinsen
- 13: Boden
- 14, 14': Teilarrays
- LV: Lichtverteilung
- FB, FB': Flächenbereiche
- L, L': Linien

## Patentansprüche

1. Beleuchtungsvorrichtung, insbesondere für ein Kraftfahrzeug (1), umfassend ein Multiapertur-Projektionsdisplay (7) mit einem Leuchtmittel (10) zur Beleuchtung einer Vielzahl von Bildsegmenten (11, 11') sowie einem Array aus Projektionslinsen (12, 12'), wobei jeder Projektionslinse (12, 12') ein Bildsegment (11, 11') zugeordnet ist, das mittels der zugehörigen Projektionslinse (12, 12') in eine Projektionsebene (13) projiziert wird, wodurch in der Projektionsebene (13) aus allen projizierten Bildsegmenten (11, 11') eine Lichtverteilung (LV) erzeugt wird, wobei das Array aus Projektionslinsen (12, 12') mehrere Teilarrays (14, 14') umfasst, wobei ein jeweiliges Teilarray (14, 14') die gleichen Projektionslinsen (12, 12') enthält und sich die Projektionslinsen (12, 12') von unterschiedlichen Teilarrays (14, 14') voneinander unterscheiden, so dass jedes Teilarray (14, 14') einen Flächenbereich (FB, FB') in der Lichtverteilung (LV) generiert und die Größe und/oder Position der generierten Flächenbereiche (FB, FB') zwischen den Teilarrays (14, 14') unterschiedlich ist,
**dadurch gekennzeichnet, dass** alle Projektionslinsen (12, 12') des Arrays auf einem vorbestimmten Linsentyp mit vorgegebener Form und Größe beruhen, wobei die Projektionslinsen (12') eines oder mehrerer der Teilarrays (14') jeweils einen Teilbereich des vorbestimmten Linsentyps in dessen Draufsicht darstellen, wobei der Teilbereich des vorbestimmten Linsentyps ein Bereich ist, der von der Fläche des vorbestimmten Linsentyps in dessen Draufsicht mittels einer oder mehrerer Linien abgetrennt ist.

2. Beleuchtungsvorrichtung nach Anspruch 1, **dadurch gekennzeichnet, dass** die Teilarrays (14, 14') ein erstes Teilarray (14) umfassen, dessen generierter Flächenbereich (FB) mit der Gesamtfläche der Lichtverteilung (LV) in der Projektionsebene (13) übereinstimmt, sowie ein zweites Teilarray (14'), dessen generierter Flächenbereich (FB') eine Teilfläche der Lichtverteilung (LV) in der Projektionsebene (13) ist.

3. Beleuchtungsvorrichtung nach Anspruch 1 oder 2, **dadurch gekennzeichnet, dass** die Projektionslinsen (12) eines der Teilarrays (14) jeweils mit dem vorbestimmten Linsentyp übereinstimmen.

4. Beleuchtungsvorrichtung nach einem der vorhergehenden Ansprüche, **dadurch gekennzeichnet, dass** die Linien zumindest abschnittsweise gerade und/oder zumindest abschnittsweise gekrümmt sind.

5. Beleuchtungsvorrichtung nach einem der vorhergehenden Ansprüche, **dadurch gekennzeichnet, dass** die Bildsegmente (11, 11') jeweils eine Objektstruktur enthalten, welche durch die zugehörige Projektionslinse (12, 12') in die Projektionsebene (13) projiziert wird, wobei die Objektstrukturen der Bildsegmente (11, 11'), die durch die Projektionslinsen (12. 12') des gleichen Teilarrays (14, 14') projiziert werden, derart ausgestaltet sind, dass sie das gleiche Einzelbild in dem entsprechenden Flächenbereich (FB, FB') in der Projektionsebene (13) erzeugen.

6. Beleuchtungsvorrichtung nach Anspruch 5 in Kombination mit Anspruch 2, **dadurch gekennzeichnet, dass** eine jeweilige Objektstruktur des zweiten Teilarrays (14') einen Ausschnitt aus einer jeweiligen Objektstruktur des ersten Teilarrays (14) derart darstellt, dass im Überlappungsbereich der generierten Flächenbereiche (FB, FB') des ersten und zweiten Teilarrays (14, 14') die Bilder der beiden Teilarrays (14, 14') in der Lichtverteilung (LV) miteinander übereinstimmen.

7. Beleuchtungsvorrichtung nach einem der vorhergehenden Ansprüche, **dadurch gekennzeichnet, dass** die Beleuchtungsvorrichtung eine Umfeldbeleuchtungseinrichtung zur Erzeugung einer Lichtverteilung (LV) auf dem Boden in der Umgebung eines Kraftfahrzeugs (1) ist.

8. Beleuchtungsvorrichtung nach Anspruch 7, **dadurch gekennzeichnet, dass** die Projektionslinsen (12, 12') der Teilarrays (14, 14') derart ausgestaltet sind, dass in einer schrägen Einbauposition der Umfeldbeleuchtungseinrichtung im Kraftfahrzeug die Lichtstärke der Lichtstrahlung des Multiapertur-Projektionsdisplays (7) in einem ersten Winkelbereich, der auf einen Bereich des Bodens (13) mit größerem Abstand vom Multiapertur-Projektionsdisplay (7) als ein zweiter Winkelbereich fällt, höher ist als die Lichtstärke der Lichtstrahlung des Multiapertur-Projektionsdisplays (7) in dem zweiten Winkelbereich, wobei in der schrägen Einbauposition der Boden (13) gegenüber der Ebene, in der Projektionslinsen (12, 12') angeordnet sind, geneigt ist.

9. Kraftfahrzeug, umfassend eine oder mehrere Beleuchtungsvorrichtungen nach einem der vorhergehenden Ansprüche.

## Claims

1. Illumination device, in particular for a motor vehicle (1), comprising a multi-aperture projection display (7) having a lighting means (10) for illuminating a multiplicity of image segments (11, 11') and an array of projection lenses (12, 12'), wherein each projection lens (12, 12') is assigned an image segment (11, 11') that is projected into a projection plane (13) by way of the associated projection lens (12, 12'), as a result of which a light distribution (LV) is produced from all of the projected image segments (11, 11') in the projection plane (13), wherein
the array of projection lenses (12, 12') comprises a plurality of subarrays (14, 14'), wherein a respective subarray (14, 14') contains the same projection lenses (12, 12') and the projection lenses (12, 12') of different subarrays (14, 14') differ from one another such that each subarray (14, 14') generates a surface area (FB, FB') in the light distribution (LV) and the size and/or position of the generated surface areas (FB, FB') varies between the subarrays (14, 14'),
**characterized in that** all of the projection lenses (12, 12') of the array are based on a predetermined lens type with a prescribed shape and size, wherein the projection lenses (12') of one or more of the subarrays (14') each constitute a subregion of the predetermined lens type in the plan view thereof, wherein the subregion of the predetermined lens type is a region that is delineated by the area of the predetermined lens type in the plan view thereof by way of one or more lines.

2. Illumination device according to Claim 1, **characterized in that** the subarrays (14, 14') comprise a first subarray (14) whose generated surface area (FB) corresponds to the overall area of the light distribution (LV) in the projection plane (13), and a second subarray (14') whose generated surface area (FB') is a subarea of the light distribution (LV) in the projection plane (13) .

3. Illumination device according to Claim 1 or 2, **characterized in that** the projection lenses (12) of one of the subarrays (14) each correspond to the predetermined lens type.

4. Illumination device according to one of the preceding claims, **characterized in that** the lines are at least sectionally straight and/or at least sectionally curved.

5. Illumination device according to one of the preceding claims, **characterized in that** the image segments (11, 11') each contain an object structure that is projected into the projection plane (13) by the associated projection lens (12, 12'), wherein the object structures of the image segments (11, 11') that are projected by the projection lenses (12, 12') of the same subarray (14, 14') are configured such that they produce the same individual image in the corresponding surface area (FB, FB') in the projection plane (13).

6. Illumination device according to Claim 5 in combination with Claim 2, **characterized in that** a respective object structure of the second subarray (14') constitutes a section of a respective object structure of the first subarray (14), such that, in the region of overlap of the generated surface areas (FB, FB') of the first and second subarrays (14, 14'), the images of the two subarrays (14, 14') correspond to one another in the light distribution (LV) .

7. Illumination device according to one of the preceding claims, **characterized in that** the illumination device is an ambient illumination apparatus for producing a light distribution (LV) on the ground in the surroundings of a motor vehicle (1).

8. Illumination device according to Claim 7, **characterized in that** the projection lenses (12, 12') of the subarrays (14, 14') are configured such that, in an oblique installation position of the ambient illumination apparatus in the motor vehicle, the light intensity of the light radiation of the multi-aperture projection display (7) in a first angular range, which falls on a region of the ground (13) at a greater distance from the multi-aperture projection display (7) than a second angular range, is higher than the light intensity of the light radiation of the multi-aperture projection display (7) in the second angular range, wherein, in the oblique installation position, the ground (13) is inclined with respect to the plane in which projection lenses (12, 12') are arranged.

9. Motor vehicle, comprising one or more illumination devices according to one of the preceding claims.

## Revendications

1. Dispositif d'éclairage, destiné en particulier à un véhicule automobile (1), ledit dispositif comprenant un écran de projection à ouvertures multiples (7) pourvu d'un moyen lumineux (10) destiné à éclairer une multitude de segments d'image (11, 11') et un agencement de lentilles de projection (12, 12'), à chaque lentille de projection (12, 12') étant associé un segment d'image (11, 11') qui est projeté dans un plan de projection (13) au moyen de la lentille de projection (12, 12') associée de manière à générer une distribution de lumière (LV) dans le plan de projection (13) à partir de tous les segments d'image (11, 11') projetés, l'agencement de lentilles de projection (12, 12') comprenant une pluralité d'agencements partiels (14, 14'), une partie d'agencement respective (14, 14') contenant les mêmes lentilles de projection (12, 12') et les lentilles de projection (12, 12') de différentes parties d'agencement (14, 14') différant les unes des autres de sorte que chaque partie d'agencement (14, 14') génère une zone de surface (FB, FB') dans la distribution de lumière (LV) et que la dimension et/ou la position des zones de surface (FB, FB') générées entre les parties d'agencement (14, 14') soient différentes,
**caractérisé en ce que** toutes les lentilles de projection (12, 12') de l'agencement sont basées sur un type de lentille prédéterminé ayant une forme et une dimension prédéterminées, les lentilles de projection (12') d'au moins une partie d'agencement (14') représentant chacune une zone partielle du type de lentille prédéterminé dans une vue de dessus de celle-ci, la zone partielle du type de lentille prédéterminé étant une zone qui est séparée de la surface du type de lentille prédéterminé, dans une vue en plan de celle-ci, au moyen d'au moins une ligne.

2. Dispositif d'éclairage selon la revendication 1, **caractérisé en ce que** les parties d'agencement (14, 14') comprennent une première partie d'agencement (14) dont la zone de surface générée (FB) coïncide avec la surface totale de la distribution de lumière (LV) dans le plan de projection (13), et une deuxième partie d'agencement (14') dont la zone de surface générée (FB') est une zone partielle de la distribution de lumière (LV) dans le plan de projection (13).

3. Dispositif d'éclairage selon la revendication 1 ou 2, **caractérisé en ce que** les lentilles de projection (12) de l'une des parties d'agencement (14) correspondent chacune au type de lentille prédéterminé.

4. Dispositif d'éclairage selon l'une des revendications précédentes, **caractérisé en ce que** les lignes sont au moins partiellement droites et/ou au moins partiellement incurvées.

5. Dispositif d'éclairage selon l'une des revendications précédentes, **caractérisé en ce que** les segments d'image (11, 11') contiennent chacun une structure d'objet qui est projetée dans le plan de projection (13) par le biais de la lentille de projection (12, 12') associée, les structures d'objet des segments d'image (11, 11') qui sont projetés par le biais des lentilles de projection (12, 12') de la même partie d'agencement (14, 14') étant conçues de manière à avoir la même image individuelle dans la zone de surface (FB, FB') correspondante dans le plan de projection (13).

6. Dispositif d'éclairage selon la revendication 5 en combinaison avec la revendication 2, **caractérisé en ce qu'**une structure d'objet respective de la deuxième partie d'agencement (14') représente une section d'une structure d'objet respective de la première partie d'agencement (14) de sorte que, dans la zone de chevauchement des zones de surface (FB, FB') générées des première et deuxième parties d'agencement (14, 14'), les images des deux parties d'agencement (14, 14') coïncident entre elles dans la distribution de lumière (LV).

7. Dispositif d'éclairage selon l'une des revendications précédentes, **caractérisé en ce que** le dispositif d'éclairage est un moyen d'éclairage ambiant destiné à générer une distribution de lumière (LV) sur le sol dans l'environnement d'un véhicule automobile (1).

8. Dispositif d'éclairage selon la revendication 7, **caractérisé en ce que** les lentilles de projection (12, 12') des parties d'agencement (14, 14') sont conçues de telle sorte que, lorsque le moyen d'éclairage ambiant se trouve dans une position de montage oblique dans le véhicule automobile, l'intensité lumineuse du rayonnement lumineux de l'écran de projection à ouvertures multiples (7) dans une première plage angulaire, qui est incidente à une zone du sol (13) à une distance plus grande de l'écran de projection à ouvertures multiples (7) qu'une deuxième plage angulaire, est supérieure à l'intensité lumineuse du rayonnement lumineux de l'écran de projection à ouvertures multiples (7) dans la deuxième plage angulaire, dans la position de montage oblique, le sol (13) étant incliné par rapport au plan dans lequel les lentilles de projection (12, 12') sont disposées.

9. Véhicule automobile comprenant au moins un dispositif d'éclairage selon l'une des revendications précédentes.
